# EUROPEAN PATENT APPLICATION

(11) **EP 0 952 164 A1**
(43) Date of publication of application: **27.10.1999**
(21) Application number: 98107496.6
(22) Date of filing: 24.04.1998
(51) Int. Cl.: C08F 10/02, C08F 4/654, C08F 4/658

(54) **Production of polyethylene having a broad molecular weight distribution**

(71) Applicant: FINA RESEARCH S.A., B-7181 Seneffe (Feluy) (BE)
(72) Inventor: Debras, Guy, 6210 Frasnes Lez Gosselies (BE); Peters, Liliane, 1495 Marbais (BE)

(57) **Abstract**

A process for producing polyethylene in the presence of a Ziegler-Natta catalyst, the process comprising providing a titanated magnesium chloride-supported Ziegler-Natta catalyst having metallocenic sites therein and producing polyethylene by homopolymerisation of ethylene and hydrogen, or by copolymerisation of ethylene with an alpha-olefinic comonomer comprising from 3 to 8 carbon atoms, in the presence of the catalyst. The invention also provides a process for producing a metallocenic Ziegler-Natta catalyst, the process comprising providing a titanated magnesium chloride supported Ziegler-Natta catalyst and contacting the catalyst with a compound containing metallocenic ligands thereby to introduce metallocenic sites into the Ziegler-Natta catalyst. The invention further provides a metallocenic Ziegler-Natta catalyst comprising a titanated magnesium chloride supported Ziegler-Natta catalyst having metallocenic sites therein.

## Description

The present invention relates to a process for the production of polyethylene, in particular high density polyethylene (HDPE) having a broad molecular weight distribution. The present invention also relates to a process for producing a Ziegler-Natta catalyst and to such a catalyst.

For polyethylene, and for high density polyethylene (HDPE) in particular, the molecular weight distribution (MWD) is a fundamental property which determines the properties of the polymer, and thus its applications. It is generally recognised in the art that the molecular weight distribution of a polyethylene resin can principally determine the physical, and in particular the mechanical, properties of the resin and that the provision of different molecular weight polyethylene molecules can significantly affect the rheological properties of the polyethylene as a whole.

Since an increase in the molecular weight normally improves the physical properties of polyethylene resins, there is a strong demand for polyethylene having high molecular weight. However, it is the high molecular weight molecules which render the polymers more difficult to process. On the other hand, a broadening in the molecular weight distribution tends to improve the flow of the polymer when it is being processed at high rates of shear. Accordingly, in applications requiring a rapid transformation employing quite high inflation of the material through a die, for example in blowing and extrusion techniques, the broadening of the molecular weight distribution permits an improvement in the processing of polyethylene at high molecular weight (this being equivalent to a low melt index, as is known in the art). It is known that when the polyethylene has a high molecular weight and also a wide molecular weight distribution, the processing of the polyethylene is made easier as a result of the low molecular weight portion and also the high molecular weight portion contributes to improved mechanical properties for the polyethylene film. A polyethylene of this type may be processed utilising less energy with higher processing yields.

The molecular weight distribution can be completely defined by means of a curve obtained by gel permeation chromatography. Generally, the molecular weight distribution is defined by a parameter, known as the dispersion index D, which is the ratio between the average molecular weight by weight (Mw) and the average molecular weight by number (Mn). The dispersion index constitutes a measure of the width of the molecular weight distribution. For most applications, the dispersion index varies between 10 and 30.

As discussed above, high density polyethylene consists of high and low molecular weight fractions. The high molecular weight fraction provides good mechanical properties to the high density polyethylene and the low molecular weight fraction is required to give good processability to the high density polyethylene, the high molecular weight fraction having relatively high viscosity which can lead to difficulties in processing such a high molecular weight fraction. In a bimodal high density polyethylene, the mixture of the high and low melting weight fractions is adjusted as compared to a monomodal distribution so as to increase the proportion of high molecular weight species in the polymer. This can provide improved mechanical properties.

It is accordingly recognised in the art that it is desirable to have a bimodal distribution of molecular weight in the high density polyethylene. For a bimodal distribution a graph of the molecular weight distribution as determined for example by gel permeation chromatography, may for example include in the curve a "shoulder" on the high molecular weight side of the peak of the molecular weight distribution.

The manufacture of bimodal polyethylene is known in the art. It is known in the art that in order to achieve a bimodal distribution, which reflects the production of two polymer fractions, having different molecular weights, one catalyst with two active sites can be employed and the operating conditions are changed whereby the two active sites of the catlayst produce two respective different fractions. Those two sites in turn catalyse two reactions for the production of the two polymers to enable the bimodal distribution to be achieved. Currently, as has been known for many years, as exemplified by EP-A-0057420, the commercial production of bimodal high density polyethylene is carried out by a two step process, using two reactors in series. In the two step process, the process conditions and the catalyst can be optimised in order to provide a high efficiency and yield for each step in the overall process.

In the applicant's earlier WO-A-95/10548 and WO-A-95/11930, it was proposed to use a Ziegler-Natta catalyst to produce polyethylene having a bimodal molecular weight distribution in a two stage polymerisation process in two liquid full loop reactors in series. In the polymerisation process, the comonomer is fed into the first reactor and the high and low molecular weight polymers are produced in the first and second reactors respectively. The introduction of comonomer into the first reactor leads to the incorporation of the comonomer into the polymer chains in turn leading to the relatively high molecular weight fraction being formed in the first reactor. In contrast, no comonomer is deliberately introduced into the second reactor and instead a higher concentration of hydrogen is present in the second reactor to enable the low molecular weight fraction to be formed therein.

These prior processes suffer from the technical disadvantage that some unreacted comonomer can pass through from the first reactor to the second reactor thereby to react with the ethylene monomer therein leading to an increase in the branching of the fraction produced in the second reactor. This in turn can deteriorate the mechanical properties for a given density of the final resin.

The present invention aims to provide a process for producing polyethylene having a broad molecular weight distribution, and in particular a bimodal molecular weight distribution, which overcomes or at least mitigates some of the problems in the prior art discussed above.

Accordingly, the present invention provides a process for producing polyethylene in the presence of a titanated magnesium chloride-supported Ziegler-Natta catalyst, the process comprising providing a titanated magnesium chloride-supported Ziegler-Natta catalyst having metallocenic sites therein and producing polyethylene by homopolymerisation of ethylene and hydrogen, or by copolymerisation of ethylene with an alpha-olefinic comonomer comprising from 3 to 8 carbon atoms, in the presence of the catalyst.

The present invention further provides a process for producing a Ziegler-Natta catalyst, the process comprising providing a titanated magnesium chloride-supported Ziegler-Natta catalyst and contacting the catalyst with a compound containing metallocenic ligands thereby to introduce metallocenic sites into the Ziegler-Natta catalyst.

The present invention further provides a metallocenic-modified Ziegler-Natta catalyst comprising a titanated magnesium chloride-supported Ziegler-Natta catalyst having metallocenic sites therein.

The metallocenic sites are preferably comprised of cyclopentadienyl groups.

The present invention is predicated on the surprising discovery by the present inventor that the production of, respectively, low and high molecular weight fractions of a polyethylene can be achieved in a single reactor by using a titanated magnesium chloride-supported Ziegler-Natta catalyst having metallocenic sites, thereby to yield high density polyethylene having a bimodal molecular weight distribution with improved mechanical properties.

Without being bound by theory, it is believed that this unexpected technical effect results from the metallocenic groups replacing some groups in the Ziegler-Natta catalyst, for example chlorine atoms in a magnesium chloride supported Ziegler-Natta catalyst containing titanium in the form of titanium chloride, thereby to form two different types of active catalytic site at the catalyst surface, for example two types of Ti site. These two sites are believed in turn to catalyse the polymerisation of relatively lower and relatively higher molecular weight fractions of polyethylene leading to a broad, preferably bimodal, molecular weight distribution for the polyethylene resin.

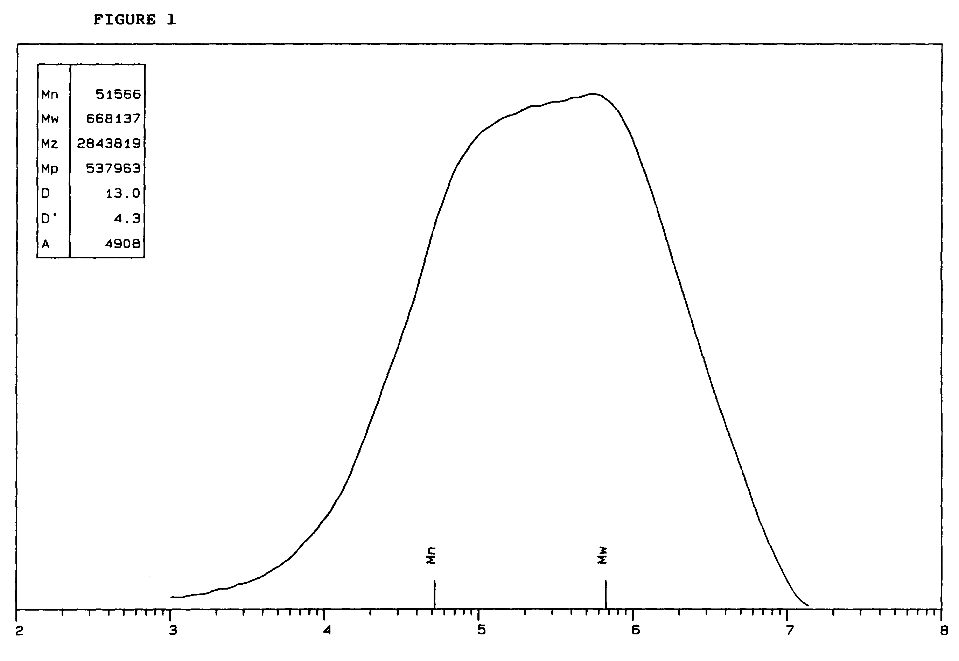

Embodiments of the present invention will now be described by way of Example only with reference to the accompanying drawings, in which:-
Figures 1 to 9 are graphs showing the molecular weight distribution of polyethylene resins produced in accordance with Examples of the invention and a Comparative Example.

The Ziegler-Natta catalyst in accordance with a preferred embodiment of the present invention is a so-called high yield catalyst which is supported on magnesium chloride and has been titanated. The Ziegler-Natta catalyst preferably comprises from 5 to 17wt% titanium, most typically around 16wt% titanium.

The Ziegler-Natta catalyst preferably consists of a transition metal component (compound A) which is the reaction product of an organomagnesium compound with a titanium compound (to form a titanated magnesium chloride support) and an organoaluminium component (compound B).

As transition metal compounds suitable for the preparation of component A, there are used tetravalent halogenated titanium compounds, preferably titanium compounds of the general formula TiXₙ(OR)₄₋ₙ in which n is 1 to 4, X stands for chlorine or bromine, and R for identical or different hydrocarbon radicals, especially straight-chain or branched alkyl groups having 1 to 18, preferably 1 to 10, carbon atoms.

Examples thereof are:
TiCl₄, Ti(OC₂H₅)₂Cl₂, Ti(OC₂H₅)₃Cl, Ti(OC₃H₇)₂Cl₂, Ti(OC₃H₇)₃Cl, Ti(OiC₃H₇)₂Cl₂, Ti(OiC₃H₇)₃Cl, Ti(OiC₄H₉)₂Cl₂, Ti(OiC₄H₉)₃Cl

In some cases, it may be advantageous to prepare the halogeno-ortho-titanic acid esters of the above formula in situ by reacting the respective ortho-titanic acid ester with TiCl₄ in a corresponding proportion.

This reaction is advantageously carried out at temperatures of from 0 to 200°C, the upper temperature limit being determined by the decomposition temperature of the tetravalent halogenated titanium compound used; it is advantageously carried out at temperatures of from 60 to 120°C.

The reaction may be effected in inert diluents, for example aliphatic or cycloaliphatic hydrocarbons as are currently used for the low pressure process such as butane, pentane, hexane, heptane, cyclohexane, methyl-cyclohexane as well as aromatic hydrocarbons, such as benzene or toluene; hydrogenated Diesel oil fractions which have been carefully freed from oxygen, sulphur compounds and moisture are also useful.

Subsequently, the reaction product of magnesium alcoholate and tetravalent halogenated titanium compound which is insoluble in hydrocarbons is freed from unreacted titanium compound by washing it several times with one of the above inert diluents in which the titanium-(IV)-compound used is readily soluble.

For preparing component A, magnesium alcoholates, preferably those of the general formula Mg(OR)₂ are used, in which R stands for identical or different hydrocarbon radicals, preferably straight-chain or branched alkyl groups having 1 to 10 carbon atoms; magnesium alcoholates having alkyl groups from 1 to 4 carbon atoms are preferred. Examples thereof are Mg(OCH₃)₂, Mg(OC₂H₅)₂, Mg(OC₃H₇)₂, Mg(Oic₃H₇)₂, Mg(OC₄H₉)₂, Mg(OiC₄H₉)₂, Mg(OCH₂-CH₂-C₆H₅)₂.

The magnesium alcoholates can be prepared by known methods, for example by reacting magnesium with alcohols, especially monohydric aliphatic alcohols.

Magnesium alcoholates of the general formula X-Mg-OR in which X stands for halogen, (SO₄)_{½} carboxylate, especially acetate of OH, and R has the above remaining, may also be used.

These compounds are, for example, obtained by reacting alcoholic solutions of the corresponding anhydrous acids with magnesium.

The titanium contents of component A may be within the range of from 0.05 to 10mg.-atom, per gram of component A. It can be controlled by the reaction time, the reaction temperature and the concentration of the tetravalent halogenated titanium compound used.

The concentration of the titanium component fixed on the magnesium compound is advantageously in the range of from 0.005 to 1.5mmol, preferably from 0.03 to 0.8mmol, per litre of dispersing agent or reactor volume. Generally, even higher concentrations are possible.

The organo-aluminium compounds used may be reaction products of aluminium-trialkyl or aluminium -dialkyl hydrides with hydrocarbon radicals having 1 to 16 carbon atoms, preferably Al(iBu)₃ or Al(iBu)₂H and diolefins containing 4 to 20 carbon atoms, preferably isoprene; for example aluminium isoprenyl.

Furthermore, suitable as component B are chlorinated organo-aluminium compounds, for example dialkyl-aluminium monochlorides of the formula R₂AlCl or alkyl-aluminium sesquichlorides of the formula R₃Al₂Cl₃, in which formulae R stands for identical or different hydrocarbon radicals, preferably alkyl groups having 1 to 16 carbon atoms, preferably 2 to 12 carbon atoms, for example (C₂H₅)₂AlCl, (iC₄H₉)₂AlCl, or (C₂H₅)₃Al₂Cl₃.

It is advantageous to use, as component B, aluminium-trialkyls of the formula AlR₃ or aluminium-dialkyl hydrides of the formula AlR₂H, in which formulae R stands for identical or different hydrocarbons, preferably alkyl groups having 1 to 16, preferably 2 to 6, carbon atoms, for example Al(C₂H₅)₃, Al(C₂H₅)₂H, Al(C₃H₇)₃, Al(C₃H₇)₂H, Al(iC₄H₉)₃, or Al(iC₄H₉)₂H.

The organoaluminium may be used in a concentration of from 0.5 to 10mmol per litre of reactor volume.

The magnesium chloride-supported Ziegler-Natta catalyst containing titanium so prepared is then, in accordance with the present invention, treated with a compound having one or more metallocenic ligands in order to introduce such metallocenic ligands into the Ziegler-Natta catalyst. The metallocenic ligand comprises a substituted or unsubstituted cyclopentadienyl group. The Ziegler-Natta catalyst is contacted with a compound containing one or more such metallocenic ligands in order to introduce the metallocenic ligands into the Ziegler-Natta catalyst by substitution of Cl atoms in the titanium chloride on the magnesium chloride support with the metallocenic ligands.

Preferably, the compound containing the one or more metallocenic ligands is of general formula CpₐMX_{b} where Cp is a substituted or unsubstituted cyclopentadienyl group which may be bridged to another substituent of the compound; M is a metal; X is a halogen or hydrocarbyl group having from 1 to 10 carbon atoms and a and b are the same or different and the sum of a and b is the valency of the substituent M. Particularly preferred compounds having metallocenic groups employ silicon as the metal and a most preferred compound comprises trimethyl silyl cyclopentadiene (CpTMS).

In the metallocenic ligand introduction process, the metallocenic reactant is mixed with a small amount of an organic solvent, such as pentane, and then contacts the catalyst in the gas phase in a reaction chamber. Preferably, the metallocenic introduction reaction is carried out at a temperature of from 20 to 80°C, typically around 65°C, under flow of an inert gas, such as nitrogen, for a period of from 1 to 24 hours, typically around 18 hours. The reaction conditions are controlled so as to introduce into the catalyst a selected Ti/Cp molar ratio. Preferably, the Ti/Cp molar ratio ranges from around 1 to 8, more preferably from around 2 to 4.

Following the metallocenic introduction reaction, at the nitrogen outlet of the reaction chamber a volatile reaction product trimethyl silyl chloride (TMSCl) could be detected. An advantage of using silicon as the substituent M in the metallocenic ligand-containing compound is that reaction products contain the substituent M and following introduction of the metallocenic ligands into the catalyst the reacting products can be volatile and thus readily removed from the catalyst. Without being bound by theory, it is believed that this reaction product is generated by the substitution by chlorine atoms in the titanium chloride on the magnesium chloride supported Ziegler-Natta catalyst by metallocenic cyclopentadienyl groups. In this way, it is believed that two different types of titanium sites are generated at the catalyst surface, but namely titanium chloride sites and titanium cyclopentadienyl sites.

In the preferred polymerisation process of the present invention, the ethylene polymerisation is carried out in the liquid phase in an inert diluent, the reactants comprising ethylene and hydrogen. Optionally, an alpha-olefinic comonomer comprising from 3 to 8 carbon atoms may be introduced into the polymerisation reactor. The comonomer may be selected from 1-butene, 1-pentene, 1-hexene, 4-methyl 1-pentene, 1-heptene and 1-octene. The inert diluent may comprise isobutane.

The polymerisation process is preferably carried out at a temperature of from 70 to 110°C, more preferably around 90°C, under an absolute pressure of from 20 to 42 bars, more preferably around 40 bars.

The ethylene monomer preferably comprises from 0.5 to 8%by weight based on the total weight of the ethylene monomer in the inert diluent and the hydrogen comprises from 0 to 0.20 vol% on the same basis. A particularly preferred composition in the polymerisation reactor comprises around 5% by weight ethylene and up to 0.15vol% hydrogen. If copolymerisation is also carried out in the reactor, an alpha-olefinic comonomer as described above is also introduced into the polymerisation reactor, preferably in an amount of from 0.5 to 3 wt%.

The polyethylene preferably has a high load melt index HLMI of at least 0.1g/10min, more preferably from 0.1 to 50g/10min, the high load melt index being measured using the procedures of ASTM D 1238 using a load of 21.6kg at a temperature of 190°C. The high load melt index is broadly inversely indicative of the molecular weight of the polymer. In other words, a low melt index is indicative of a high molecular weight for the polymer and vice versa.

Optionally, an alkyl metal or alkyl metal oxane cocatalyst such as methyl aluminium oxane (MAO) or triisobutyl aluminium (TIBAL) is employed in the polymerisation reactor, for example in an amount of from 10 to 500ppm by weight based on the weight of the inert diluent. Preferably, the cocatalyst is present in an organic solvent, such as toluene. The MAO may be added as an 11wt% solution in toluene and the TIBAL may be added as a 1M solution in toluene.

In accordance with the present invention, it has been found that by using a magnesium chloride supported Ziegler-Natta catalyst with metallocenic sites for ethylene polymerisation, bimodal polymers may be obtained. The inventors have also found that the bimodality of the molecular weight distribution of the polyethylenes tends to reduce with increasing concentration of hydrogen in the polymerisation process. Moreover, the present inventors have found that the introduction of metallocenic, in particular cyclopentadiene-titanium, sites into the magnesium chloride supported Ziegler-Natta catalyst broadens the molecular weight distribution of the polyethylene resin, tends to decrease the melt index of the resin and strongly increases the catalyst activity. The polyethylene resins produced in accordance with most preferred aspects of the invention typically have a dispersion index D of greater than 10, even as high as up to about 22. The high load melt index HLMI may vary from about 0.1 to up to about 8g/10min. The productivity of the catalyst is preferably greater than about 15000 grams of polyethylene per gram of catalyst per hour. Moreover, the most preferred resins exhibit a bimodal molecular weight distribution.

The invention will now be described in greater detail with reference to the following non-limiting Examples.

### EXAMPLE 1

In this Example, a magnesium chloride support Ziegler-Natta catalyst was treated so as to incorporate metallocenic ligands therein and thereafter the so-treated catalyst was employed in an ethylene polymerisation trial. In the manufacture of the catalyst, a magnesium chloride supported Ziegler-Natta catalyst containing 16wt% titanium was contacted with a selected amount of trimethyl silyl cyclopentadiene. The trimethyl silyl cyclopentadiene was added to the catalyst together with a small amount of pentane in order to ensure sufficient contact between the trimethyl silyl cyclopentadiene with the magnesium chloride supported Ziegler-Natta catalyst. The reaction was carried out at 65°C using nitrogen flow for a period of 18 hours. The amount of trimethyl silyl cyclopentadiene was selected in order to achieve in the ultimate catalyst a titanium/cyclopentadiene molar ratio of 2. At the nitrogen outlet of the reaction chamber, a volatile reaction product of trimethyl silyl chloride could be detected.

Following manufacture of the catalyst, the catalyst was used in an ethylene polymerisation trial in a 6 litre polymerisation reactor filled with 2.5 litres of isobutane as an inert diluent. The reactor pressure was 25 bars and the temperature was 90°C. The Examples were performed at this pressure on bench-scale reactors. In liquid-full reactors, typically used in commercial production, the pressure would be around 40 bars. In Example 1, a co-catalyst comprising methyl aluminium oxane as an 11% solution thereof in toluene was employed in an amount of around 200ppm based on the weight of the inert diluent. Ethylene monomer was introduced into the reaction chamber together with hydrogen, in the amount specified in Table 1.

Following a reaction period of 1 hour, the polyethylene fluff was removed from the reaction chamber and analysed. Specifically, the high load melt index (HLMI) of the polyethylene fluff was measured and the molecular weight distribution of the polyethylene fluff was also measured. The molecular weight distribution is shown in Figure 1. From the molecular weight distribution, the values Mn, Mw and Mz were determined, together with the dispersion index D. The productivity of the catalyst was also measured. These figures are given in Table 1.

It may been seen from Figure 1 that the polyethylene resin exhibited a relatively broad molecular weight distribution having a dispersion index of 13. The polyethylene resin had a low HLMI,
indicating a good breadth for the molecular weight distribution. The catalyst had good productivity for the polymerisation of ethylene.

### EXAMPLE 2

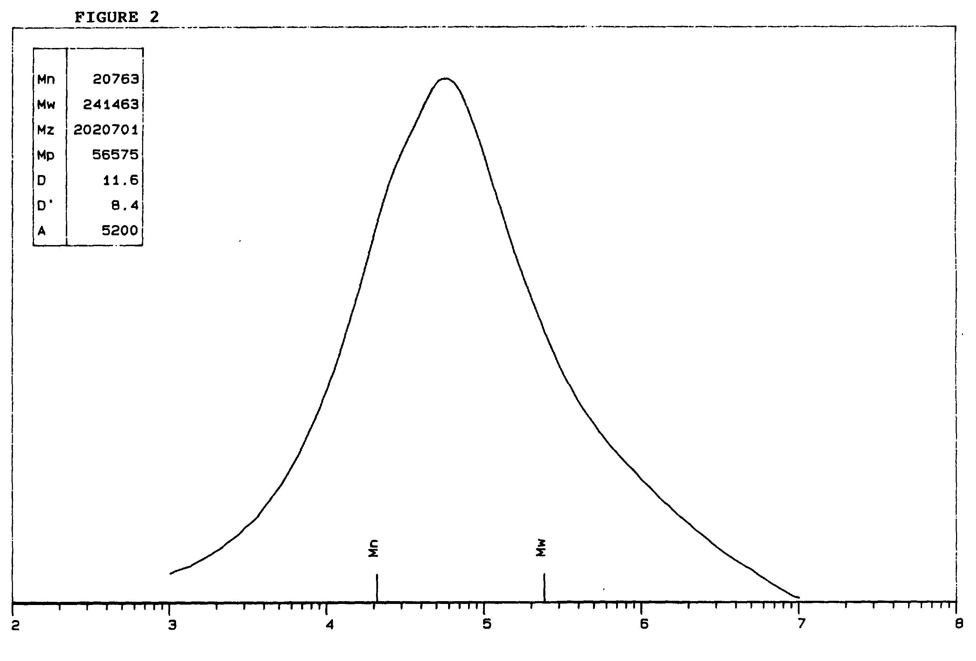

Example 2 employed the same catalyst as employed in Example 1 for the polymerisation of ethylene in the same process, but the amount of hydrogen was increased. The molecular weight distribution of the resultant polyethylene resin is illustrated in Figure 2. It may be seen that the dispersion index of the molecular weight distribution is slightly lower than for Example 1. Moreover, it may be seen from Table 1 that the HLMI of the polyethylene resin is higher than for Example 1. The productivity of the catalyst was slightly lower than in Example 1. Example 2 and Example 1 together show that the breadth of the molecular weight distribution tends to decrease with increased hydrogen concentration, and that the HLMI tends to increase with increased hydrogen concentration.

### EXAMPLE 3

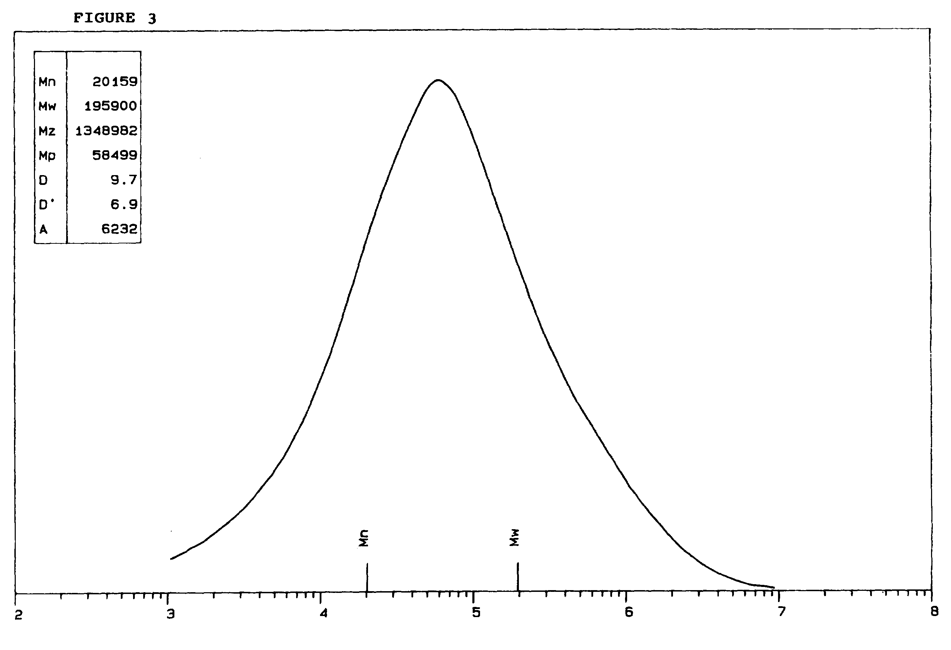

In Example 3, Example 2 was repeated but using a yet higher amount of hydrogen, namely 0.15vol%. At such a level of hydrogen, the dispersion index of the molecular weight distribution as shown in Figure 3 falls to less than 10 and the HLMI is greater than 14g/10min with the melt index MI₂ having also been measured as a value of 0.25g/10min. The melt index is measured using the procedure of ASTM D 1238 using a load of 2.16kg at a temperature of 190°C. It may be seen that at this higher concentration of hydrogen, the molecular weight distribution is less broad, leading to increasingly lower dispersion index values, and increasingly higher HLMI values.

### EXAMPLE 4

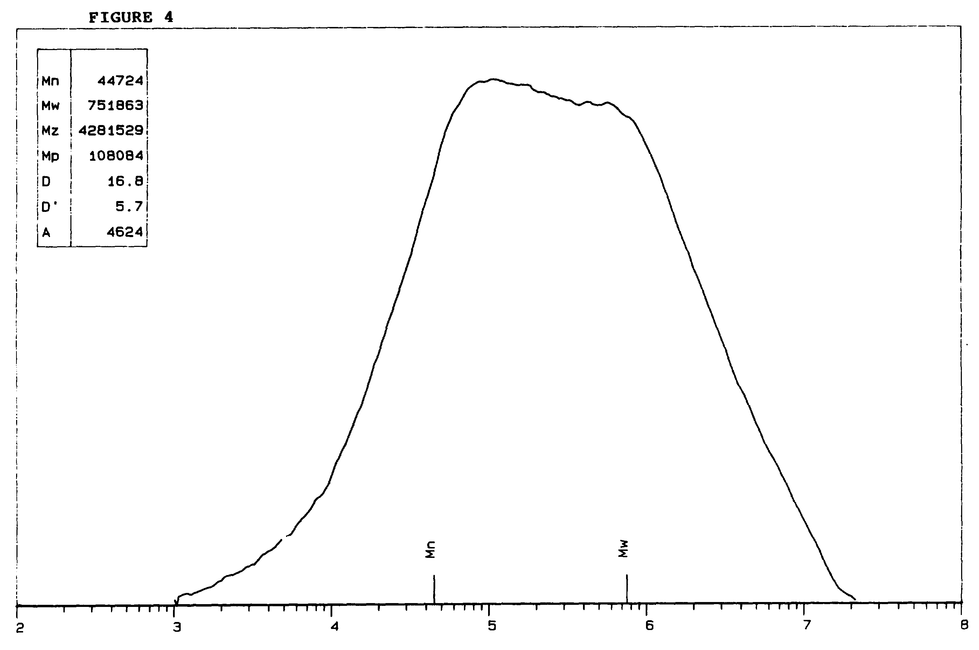

In this Example, which is a modification of Example 2, the co-catalyst employed was triisobutyl aluminium as a one molar solution thereof in toluene, as opposed to methyl aluminium oxane. The results are shown in Table 1 and the molecular weight distribution is illustrated in Figure 4. It may be seen that the dispersion index of 16.8 is reasonably high, with a correspondingly low HLMI of the polyethylene resin. The productivity of the catalyst was good.

### EXAMPLE 5

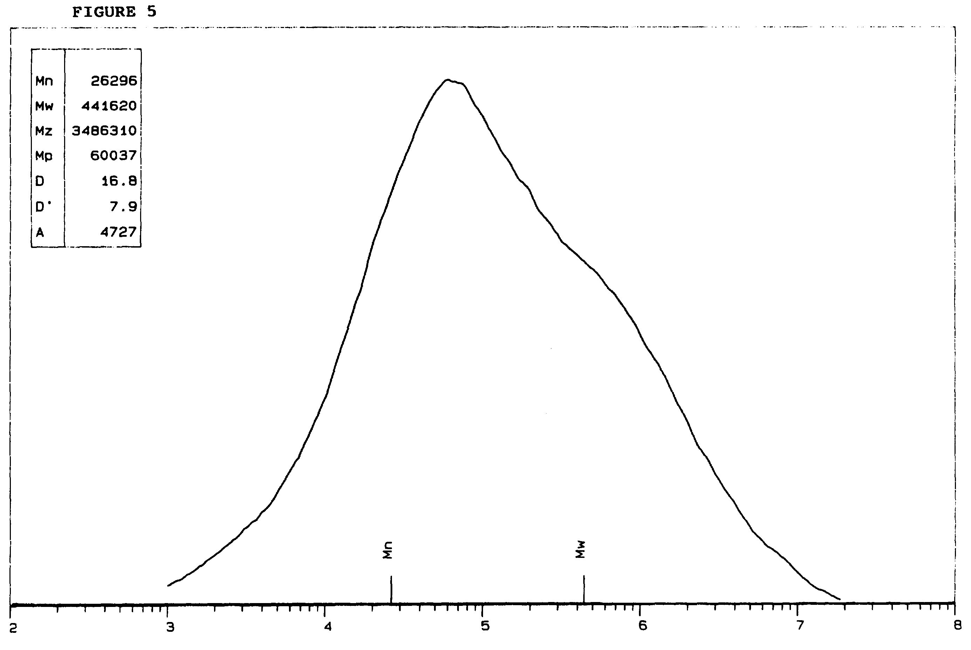

This Example was a modification of Example 4 and used a greater amount of hydrogen in the reactor. The dispersion index of the molecular weight distribution as shown in Figure 5 was the same as for Example 4, but the HLMI value was increased to around 3.1g/10min. The productivity of the catalyst was lower than for Example 4.

### EXAMPLE 6

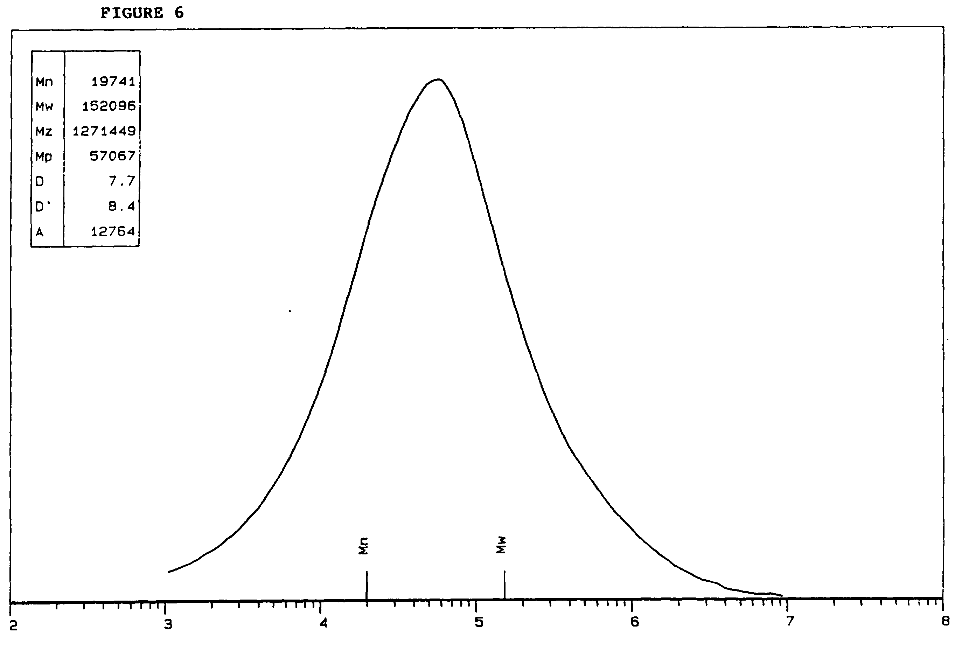

Example 6 was a modification of Example 5 and used a yet higher amount of hydrogen of 0.20vol%. As shown in Figure 4, the dispersion index was reduced to a value of less than 10, namely 7.7 and the HLMI of the polyethylene resin was increased to a value of 32.4g/10min, showing a narrow molecular weight distribution which is also demonstrated in Figure 6. The productivity of the catalyst was less than 14,000 grams of polyethylene per gram of catalyst per hour.

### EXAMPLE 7

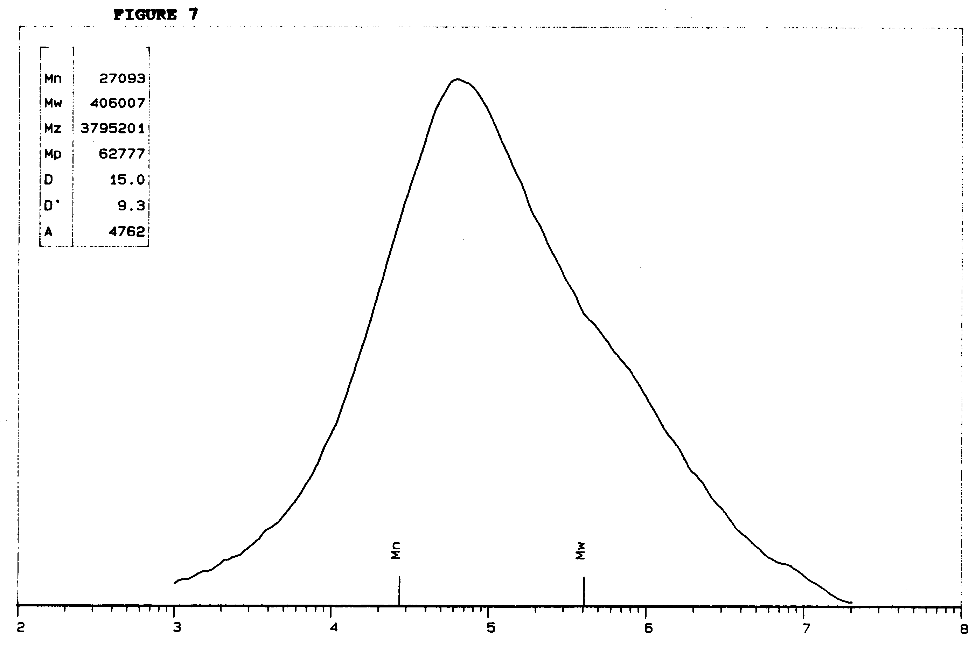

Example 7 was a modification of Example 4 but using for the catalyst a magnesium chloride based Ziegler-Natta catalyst having metallocenic sites at a titanium/cyclopentadiene molar ratio of 4, *i.e*. greater than for the previous Examples 1 to 6. It may be seen that the dispersion index was 15.0, as shown in Figure 7, and that the HLMI of the polyethylene resin was around 3.0g/10min. The productivity of the catalyst was high, at around 21,400 grams of polyethylene per gram of catalyst per hour. It may be seen from Figure 7 that the molecular weight distribution shows a bimodal characteristic.

### EXAMPLE 8

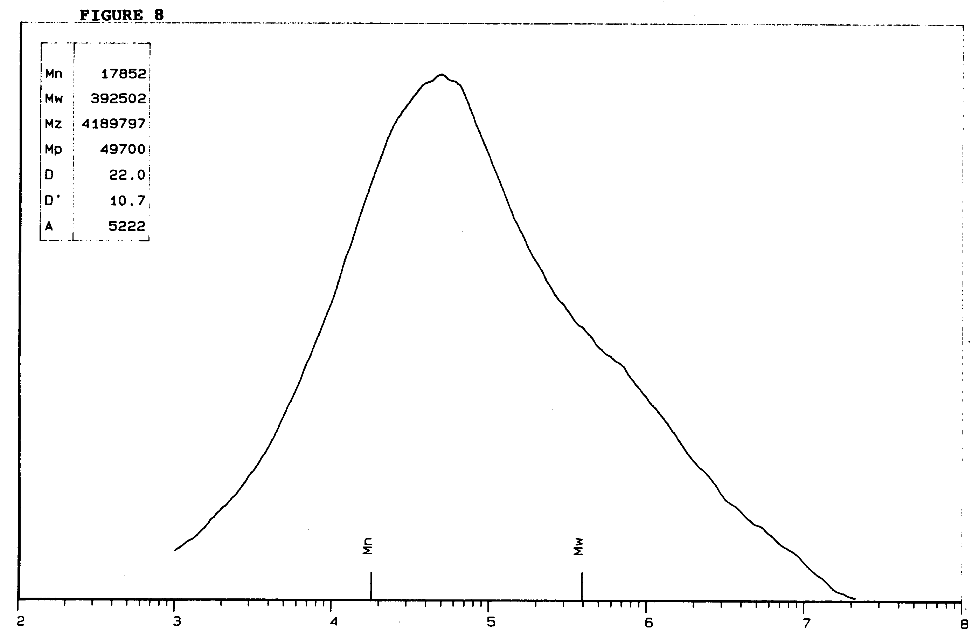

Example 8 was a modification of Example 7 using the same catalyst but with an increased amount of hydrogen in the reactor, namely 0.15vol%. The resultant polyethylene resin had a dispersion index of 22 and an HLMI of 8.2g/10min. The molecular weight distribution showed a marked bimodality as shown in Figure 8. The productivity of the catalyst however was not particularly high at only 13,200 grams of polyethylene per gram of catalyst per hour.

### COMPARATIVE EXAMPLE 1

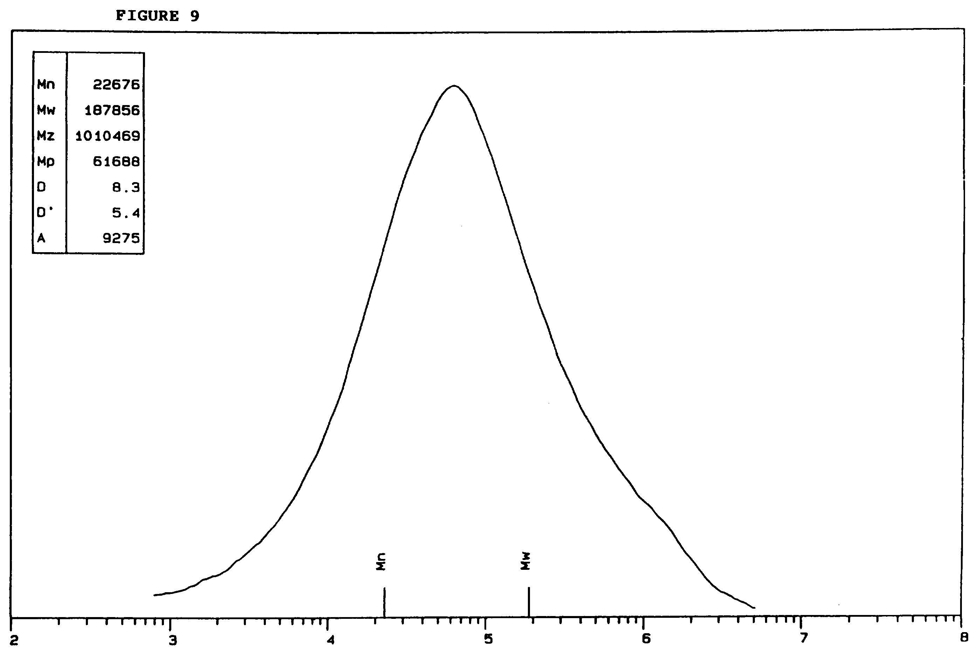

In this Comparative Example, the catalyst had not been subjected to metallocenic substitution in accordance with the invention, but was otherwise a repetition of Example 7, *i.e*. with a co-catalyst of triisobutyl aluminium and with hydrogen present in the reactor in an amount of 0.1vol%. The dispersion index is less than 10 at a value of around 8.3 and the HLMI was 11.1g/10min. As may be seen from Figure 9 the molecular weight distribution is relatively narrow. The productivity of the catalyst was low, being only 12,000 grams of polyethylene per gram of catalyst per hour. The value of M_{z}, representing the tailing of the molecular weight distribution at the high molecular weight end of the distribution, is lower than for Examples 3 and 6, which have similar values for the dispersion index D, indicating poor mechanical properties for the resin of Comparative Example 1.

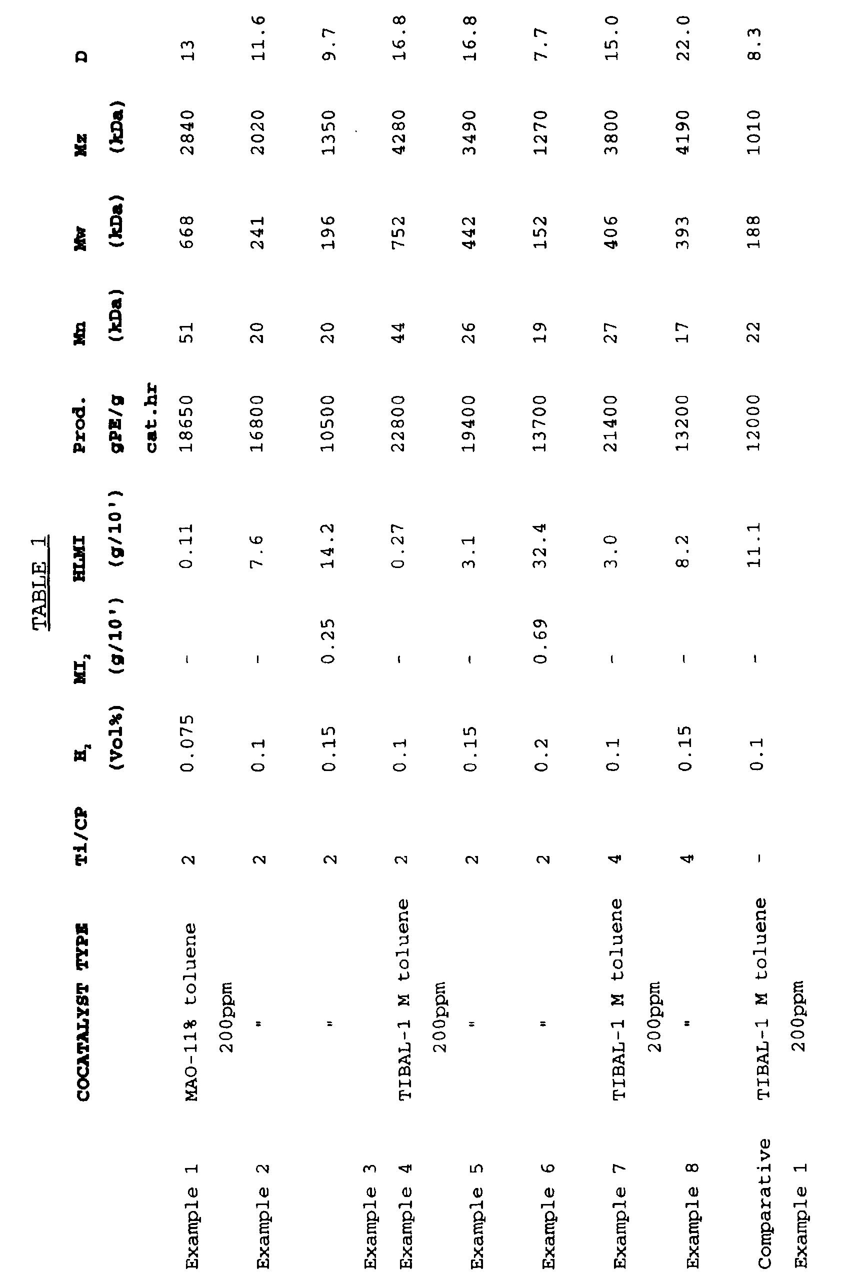

## Claims

1. A process for producing polyethylene in the presence of a titanated magnesium chloride-supported Ziegler-Natta catalyst, the process comprising providing a titanated magnesium chloride-supported Ziegler-Natta catalyst having metallocenic sites therein and producing polyethylene by homopolymerisation of ethylene and hydrogen, or by copolymerisation of ethylene with an alpha-olefinic comonomer comprising from 3 to 8 carbon atoms, in the presence of the catalyst.

2. A process according to claim 1 wherein the metallocenic sites are comprised of cyclopentadienyl groups.

3. A process according to claim 1 or claim 2 wherein the molar ratio of titanium to metallocenic groups is from 1 to 8.

4. A process according to any foregoing claim wherein the amount of hydrogen in the polymerisation reactor is up to about 0.15vol%.

5. A process according to any foregoing claim further comprising a cocatalyst in the polymerisation reactor selected from an alkyl metal oxane or a metal alkyl.

6. A process according to claim 5 wherein the cocatalyst comprises methyl aluminium oxane or triisobutyl aluminium.

7. A process for producing a metallocenic Ziegler-Natta catalyst, the process comprising providing a titanated magnesium chloride-supported Ziegler-Natta catalyst and contacting the catalyst with a compound containing metallocenic ligands thereby to introduce metallocenic sites into the Ziegler-Natta catalyst.

8. A process according to claim 7 wherein the compound containing metallocenic ligands comprises trimethyl silyl cyclopentadiene.

9. A process according to claim 7 or claim 8 wherein the Ziegler-Natta catalyst comprises from 5 to 17wt% titanium.

10. A process according to claim 9 wherein the Ziegler-Natta catalyst comprises around 16 wt% titanium.

11. A process according to any one of claims 8 to 10 wherein the metallocenic Ziegler-Natta catalyst has a titanium/metallocenic molar ratio of from 1 to 8.

12. A process according to any one of claims 7 to 11 wherein the catalyst is contacted with the compound containing metallocenic ligands at a temperature of from 20 to 80°C for a period of from 1 to 24 hours.

13. A metallocenic-modified Ziegler-Natta catalyst comprising a titanated magnesium chloride-supported Ziegler-Natta catalyst having metallocenic sites therein.

14. A catalyst according to claim 13 wherein the metallocenic sites comprise cyclopentadienyl groups.

15. A catalyst according to claim 13 or claim 14 wherein the metallocenic sites are substituted into titanium chloride present in the Ziegler-Natta catalyst.

16. A catalyst according to any one of claims 13 to 15 wherein the catalyst has a titanium/metallocene molar ratio of from 1 to 8.
